# EUROPEAN PATENT SPECIFICATION

(11) **EP 0 973 080 B1**
(45) Date of publication and mention of the grant of the patent: **09.06.2004**
(21) Application number: 99113442.0
(22) Date of filing: 12.07.1999
(51) Int. Cl.: G05D 7/06

(54) **Gas flow rate control apparatus**
Vorrichtung zur Regelung des Durchflusses eines Gases
Dispositif de régulation du débit d'un gaz

(30) Priority: 17.07.1998 JP 20401698; 17.07.1998 JP 20401798
(43) Date of publication of application: 19.01.2000
(73) Proprietor: HORIBA, LTD., Minami-ku Kyoto (JP)
(72) Inventor: Yamagish, Yutaka, c/o HORIBA, LTD., Kyoto (JP); Asano, Ichiro c/o HORIBA LTD., Kyoto (JP)
(74) Representative: Müller - Hoffmann & Partner

(56) References cited:
- EP-A- 0 749 058
- WO-A-98/13680
- US-A- 2 737 347
- PATENT ABSTRACTS OF JAPAN vol. 1996, no. 10, 31 October 1996 (1996-10-31) & JP 08 145855 A (HORIBA LTD), 7 June 1996 (1996-06-07)
- PATENT ABSTRACTS OF JAPAN vol. 1995, no. 10, 30 November 1995 (1995-11-30) & JP 07 174675 A (MITSUBISHI MOTORS CO), 14 July 1995 (1995-07-14)

## Description

### BACKGROUND OF THE INVENTION

### Field of the Invention

The present invention relates to a gas flow rate control apparatus in a gas dilution system or the like of a partial dilution type which dilutes a portion of exhaust gas from, e. g., an engine, by diluent gas.

### Description of the Prior Art

In recent years, a gas dilution system was provided for measuring particulate matter (which will be abbreviated to PM) such as soot included in gas exhausted from a diesel engine or the like of an automobile. There is a tendency to employ a small-scaled dilution system of a so-called partial dilution type which partially dilutes the exhaust gas and fully extracts the gas into a filter by controlling a flow rate of the gas, instead of a conventional full dilution system which fully dilutes the exhaust gas and partially extracts the gas into the filter. In this gas dilution system of the fully extracting type using by means of the partial dilution, a flow rate of a diluent gas (e. g., air) for diluting the exhaust gas is controlled while maintaining a diluted exhaust gas at a constant flow rate. A flow rate of extraction of the exhaust gas is obtained as a difference between these flow rates.

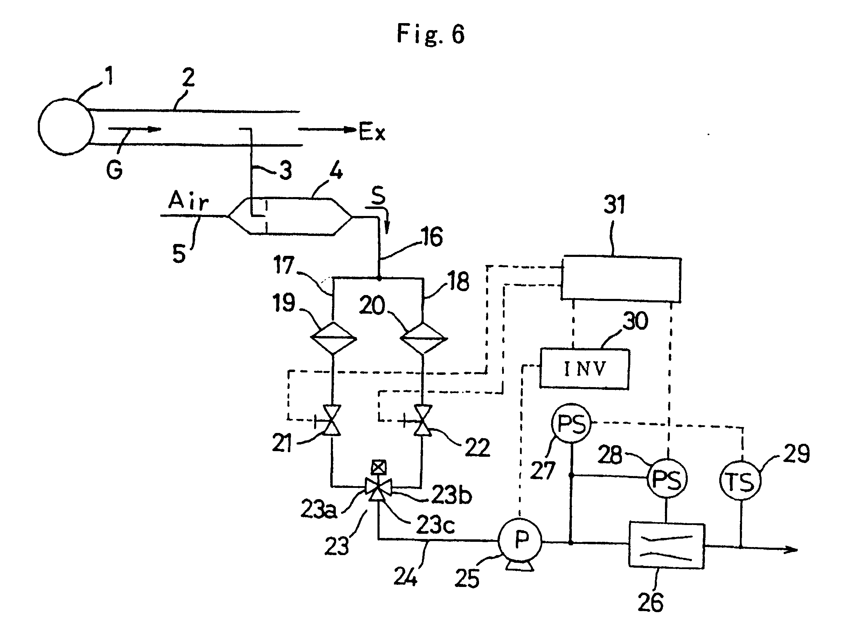

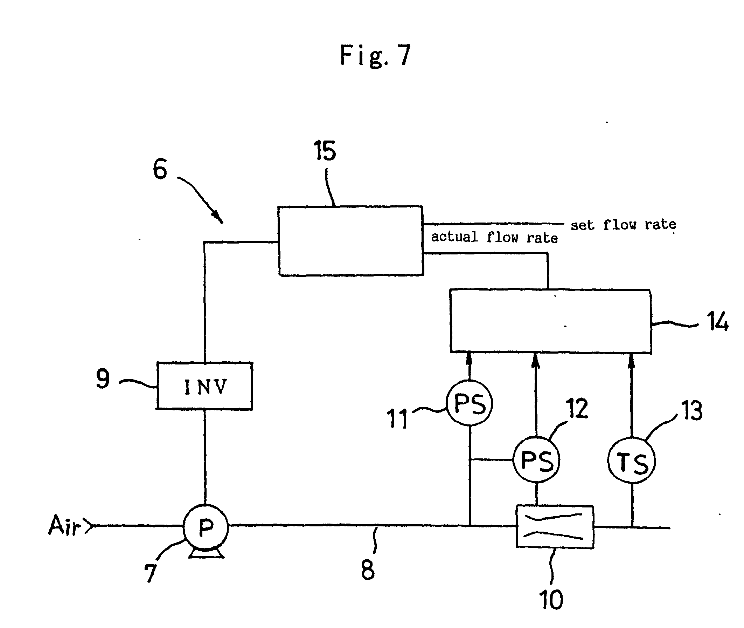

Fig. 6 shows one example of the gas dilution system of the partial dilution type. Reference number 1 represents a diesel engine mounted in an automobile, 2 represents an exhaust pipe. Reference number 3 represents a probe inserted into and connected to the exhaust pipe 2 for sampling an exhaust gas G flowing through the exhaust pipe 2. A downstream portion of the probe 3 is connected to a dilution tunnel 4 which dilutes the sampled exhaust gas G. Reference number 5 is a diluent air supply passage connected to an upstream portion of the dilution tunnel 4, and is provided with a diluent gas flow rate control apparatus 6 as shown in Fig. 7.

In Fig. 7, reference number 7 represents a root blower pump capable of varying suction force, e. g., by a rotation number control device provided in a flow passage 8, and the root blower pump 7 is controlled by an inverter (frequency converter) 9. Reference number 10 represents a venturi flowmeter as a pressure difference flowmeter having a high degree of measuring precision. A pressure sensor 11 for detecting pressure of air flowing through the flow passage 8, a pressure difference sensor 12 and a temperature sensor 13 are provided in the vicinity of the venturi flowmeter 10. The reference number 14 represents a flow rate calculation unit for calculating a flow rate (actual flow rate) of air flowing through the flow passage 8 based on a detection outputs of the sensors 10 to 13. The reference number 15 represents a comparator circuit for comparing the actual flow rate obtained by the flow rate calculation unit 14 and a preset flow rate and for outputting a predetermined control signal to the inverter 9.

The reference number 16 represents a gas flow passage connected to a downstream portion of the dilution tunnel 4, and a diluted sampled gas S flows through the gas flow passage 16. The downstream portion of the gas flow passage 16 is diverged into two passages 17 and 18 which are respectively provided with filters 19 and 20 for collecting PM included in the sampled gas, as well as control valves 21 and 22 capable of varying the throttling amount (pressure loss). One of the flow passages 17 is formed as a sample gas flow passage through which the exhaust gas at the normal time flows, and the other flow passage 18 is formed as a bypass passage through which the exhaust gas at the abnormal time flows.

The reference number 23 represents a three-way solenoid valve as flow passage switching means provided at downstream portions of the sample gas flow passage 17 and the bypass passage 18. A port 23a of the three-way solenoid valve 23 is connected to the sample gas flow passage 17, a port 23b thereof is connected to the bypass flow passage 18, and a port 23c thereof is connected to a gas flow passage 24 downstream of the three-way solenoid valve 23.

The gas flow passage 24 is sequentially provided with a suction pump, e. g., a root blower pump 25 capable of varying the suction force by controlling the number or rotation, and a pressure difference flowmeter, e. g., a venturi flowmeter 26 having a high degree of measuring precision. The reference number 27 represents a pressure sensor detecting a pressure of a gas flowing through the gas flow passage 24, 28 represents a pressure difference sensor, and 29 represents a temperature sensor.

Reference number 30 represents an inverter (frequency converter) for controlling the root blower pump 25, and 31 represents a flow rate control unit for controlling the entire apparatus. This flow rate control unit 31 outputs commands to the control valves 21, 22 and the inverter 30, and detection outputs from the sensors 27 to 29 are input to the flow rate control unit 31.

In the above-described gas sample system, a command value is output to the inverter 9 from the comparing control circuit 15 in the diluent gas flow rate control apparatus 6, and the root blower pump 7 provided in the flow passage 8 is controlled based on this command value, thereby supplying the diluent air of a predetermined amount to the dilution tunnel 4. On the other hand, a command value output from a PID controller (not shown) provided in the flow rate control unit 31 is output to the inverter 30, and based on this command, a command value is output from the inverter 30, and the root blower pump 25 is controlled based on this command value, so that the sample gas flow rate S flowing through the gas flow passages 16, 18 and 24 is controlled such that it always becomes the predetermined flow rate, thereby controlling the exhaust gas sampling flow rate.

However, in the conventional diluent gas flow rate control apparatus 6 of the above-described structure, since the pump 7 and the venturi flowmeter 10 are provided in series, there are following drawbacks.

The venturi flowmeter 10 as measuring means of the air flow rate has a high degree of measuring precision as about ± 0.1 to 0.2 % F. S. in a flow rate region in the vicinity of the full scale. Since the pump as control means of the air flow rate varies the flow rate by rotation of the pump 7, about 0.5 to 1 seconds is the limit of the flow rate control response speed due to the inertia of pump-specific.

However, in the diluent gas flow rate control apparatus 6, even if the pump 7 is replaced by a piezo valve and a pressurized air source upstream from the piezo valve so as to use the high speed response characteristic of the piezo valve, since a relatively large flow rate is controlled, the piezo valve is increased in size or the diameter of an orifice in the piezo valve is increased and therefore, the response and the control are delayed even if the venturi flowmeter 10 and the pump are combined. Therefore, the conventional diluent gas flow rate control apparatus 6 lacks high speed response ability and high precision of the flow rate control required for measuring the transient of the exhaust gas of an engine.

Further, the diluent gas flow rate control apparatus 6 also has the following problem. That is, in order to control the sampling flow rate of the exhaust gas G from the engine 1, it is necessary to control the flow rate of a diluent air A. In this case, it is unnecessary to control the diluent air A from the zero flow rate to the maximum flow rate, but it is enough to control the flow rate in a region of 70 % to 100 % of the maximum flow rate of the diluent air A. That is, the flow rate is controlled to be a constant value in a region from the maximum flow rate to about 70 %, thereof of the diluent air A, and a varying portion of the flow rate in a region of the 70 % to the maximum flow rate may be controlled. However, in the diluent gas flow rate control apparatus 6, since the flow rate is controlled in a region from the zero flow rate to the maximum flow rate of the diluent air A is controlled, the apparatus 6 lacks the speed in response.

JP 08145855 A discloses a gas flow rate control apparatus according to the preamble part of claim 1. A first flow passage provided for a diluent gas of a constant flow rate and a second flow passage provided for a diluent gas of an adjustable flow rate join together at a confluence followed by a third flow passage.

EP-A-0 749 058 discloses a gas flow rate control apparatus, wherein a piezo valve and a flow meter are disposed in series to each other in a flow passage through which gas flows. A control is provided for comparing an actual flow rate obtained by the flow meter with a set flow rate. An opening degree of the piezo valve is adjustable on the basis of the result of the comparison.

### SUMMARY OF THE INVENTION

The present invention has been accomplished in view of the above circumstances, and it is an object of the invention to provide a gas flow rate control apparatus capable of controlling, with a quick response and at a high precision, a diluent gas used in a so-called partial dilution type gas dilution system in which a portion of gas such as air or exhaust gas from an engine is diluted by diluent gas such as air.

The object of the invention is solved by a gas flow rate control apparatus according to Claim 1.

The piezo valve has response ability as high as 0.2 to 0.5 seconds in a region where the flow rate control range is not so great. Therefore, the piezo valve having such a high speed response ability and the pressure difference flowmeter having high flow rate measuring precision are combined. The first flow passage for flowing the diluent gas of the constant flow rate irrespective of variation in flow rate of the exhaust gas and the second flow passage for adjusting the flow rate of the exhaust gas in accordance with a variation in its flow rate and for flowing the same are provided in parallel. The piezo valve is controlled based on the flow rate detected by the pressure difference flowmeter. Only the varying flow rate range is controlled and therefore, it is possible to measure the flow rate with high precision and to control the flow rate with high speed response ability even though the flow rate of gas used for dilution is relatively great.

According to a preferred embodiment of the invention a control is provided for comparing the actual flow rate obtained by the flow meter with a set flow rate, wherein the opening degree of the piezo valve is adjustable on the basis of the result of the comparison.

As mentioned above, the piezo valve has response ability as high as 0.2 to 0.5 seconds in a region where the flow rate control range is not so great. Therefore, in the gas flow rate control apparatus in which the piezo valve having such a high speed response ability and the pressure difference flowmeter having high flow rate measuring precision are combined, the actual flow rate obtained by the pressure difference flowmeter is compared with the set flow rate. The opening degree of the piezo valve is adjusted based on the result of the comparison. It is therefore possible to control gas such as air with high speed response ability and high precision.

### BRIEF DESCRIPTION OF THE DRAWINGS

**Fig. 1** is a schematic view showing a structure of an essential portion of a diluent gas flow rate control apparatus according to a first embodiment of the invention;
**Fig. 2** is a schematic vertical sectional view of a structure of a piezo valve used in the diluent gas flow rate control apparatus;
**Fig. 3** is a view for explaining the operation of the diluent gas flow rate control apparatus;
**Figs. 4A/4B** are views showing another structure of a first flow passage in the diluent gas flow rate control apparatus;
**Fig. 5** is a schematic view of the entire structure of a gas flow rate control apparatus according to a second embodiment of the invention;
**Fig. 6** is a view showing one example of a gas dilution system of a partial dilution type; and
**Fig. 7** is a view showing a structure of a conventional diluent gas flow rate control apparatus.

### DETAILED DESCRIPTION OF THE PREFERRED EMBODIMENTS

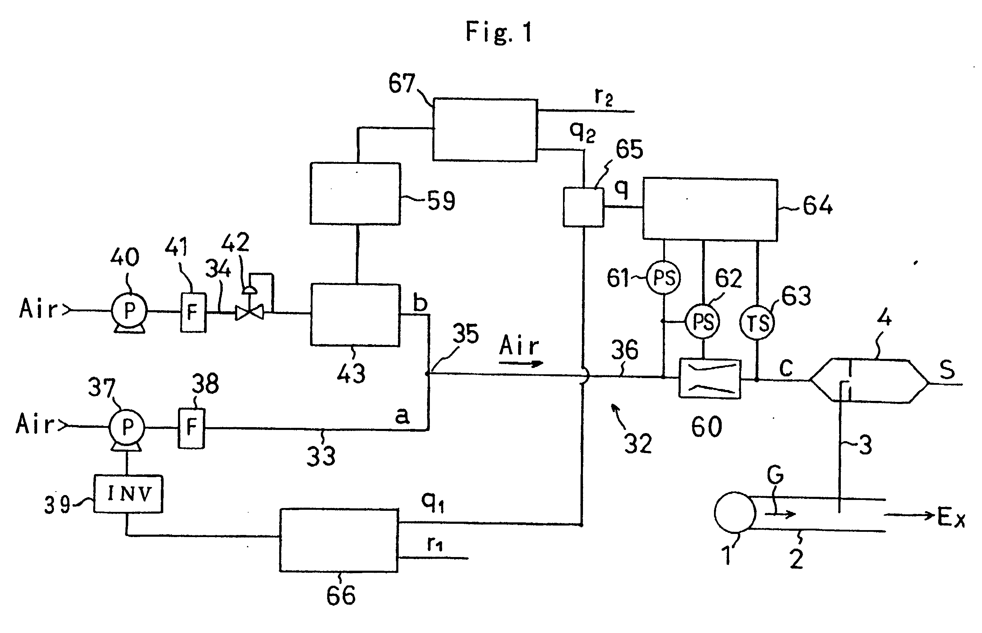

A first embodiment of the invention will be explained below with reference to the drawings in Figs. 1 to 3. In Fig. 1, the same reference numbers are used as in Figs. 6 and 7 for representing the same members.

Fig. 1 is a schematic view showing a structure of an essential portion of a diluent gas flow rate control apparatus according to the invention. In Fig. 1, reference number 32 represents a diluent gas flow rate control apparatus which is one example of a gas flow rate control apparatus. The diluent gas flow rate control apparatus 32 is connected to an upstream end of a dilution tunnel 4 to which a portion of exhaust gas G flowing through exhaust pipe 2 is installed by probe 3. This diluent gas flow rate control apparatus 32 is constructed as follows.

In Fig. 1, reference numbers 33 and 34 represent flow passages (which will be referred to as first flow passage 33 and second flow passage 34 hereinafter) disposed in parallel to each other. Downstream portions of these flow passages 33 and 34 join into one passage, and a downstream portion of a passage 36 (which will be referred to as third flow passage hereinafter) downstream from a confluence 35 is connected to the dilution tunnel 4.

The first flow passage 33 is for flowing a diluent air A whose flow rate is set to about 70 % of the maximum flow rate of the diluent gas (air in the present embodiment) irrespective of variation in flow rate of the exhaust gas G. The first flow passage 33 is provided with a suction pump, e. g., a root blower pump 37 capable of varying the suction force by controlling the rotation number, and an air filter 38 in this order. Reference number 39 represents an inverter for controlling the rotation number of the root blower pump 37. A control signal from a first comparing control circuit 66 which will be described later is input to the inverter 39.

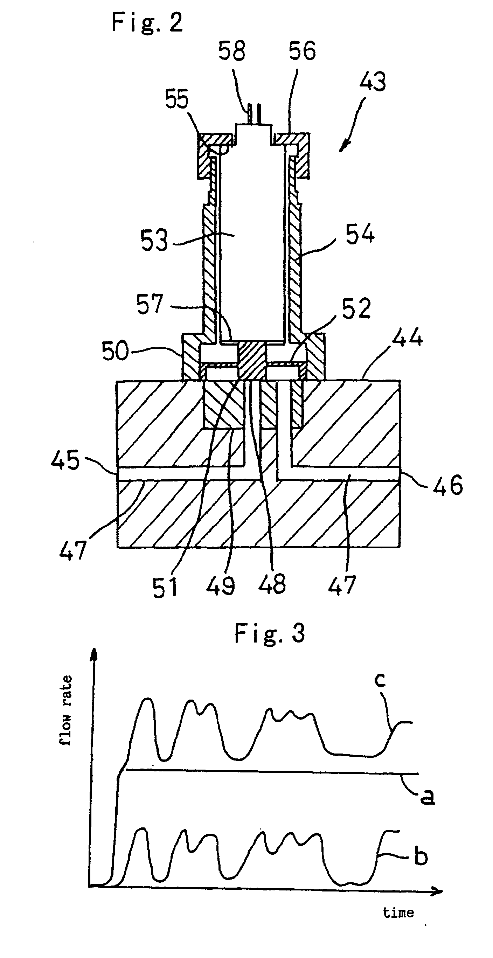

The second flow passage 34 is for adjusting the flow rate in accordance with variation in flow rate of the exhaust gas G and flowing the same, and adjusts the flow rate in a range from zero to about 30 % of the maximum flow rate of the diluent air A. This second flow passage 34 is provided with a suction pump 40, an air filter 41, a pressure governor 42 and a piezo valve 43 for controlling the flow rate, in this order. Downstream portions of the piezo valve 43 and the air filter 38 join together. The piezo valve 43 is for pushing and driving a valve element which opens and closes a valve opening by tension of a piezo stack, and is constructed as shown in Fig. 2, for example.

In Fig. 2, reference number 44 represents a body block, 45 and 46 respectively represent a fluid inlet port and a fluid outlet port formed in the body block 44. Reference number 47 represents a fluid flow passage formed between the fluid inlet port 45 and the fluid outlet port 46. An orifice block 49 provided at its upper surface with a valve port 48 is provided in on halfway through the fluid flow passage 47. The reference number 50 represents a hollow valve block provided on the body block 44 such as to cover the upper surface of the orifice block 49. A valve element 51 for adjusting the opening degree of the valve port 48 is vertically movably held in the valve block 50 by a diaphragm 52 provided such as to cover the upper surface of the orifice block 49. Under normal conditions, the valve element 51 forms a slight gap between the valve element 51 and an upper surface of the orifice block 49 (around an upper portion of the valve port 48).

The reference number 53 represents a piezo stack for pushing and driving the valve element 51 downward, and is formed by laminating a plurality of piezo elements and accommodated in a cylindrical valve case 54 threaded to the valve block 50. The piezo stack 53 is constructed such that its upper end 55 is fixed to a nut member 56 threaded to an upper end of the valve case 54. An output end 57 which is a lower end of the piezo stack 53 abuts against an upper end of the valve element 51. The reference number 58 represents a lead for supplying electricity to the piezo stack 53.

Each of the piezo elements is distorted by applying appropriate DC voltage to the piezo valve 43 having the above-described structure by a valve driving circuit 59 (see Fig. 1) controlled by a second control circuit 67 which will be described later, and the output end 57 pushes the valve element 51 downward by this distortion, thereby adjusting a distance between the valve element 51 and the valve port 48, i. e., the opening degree of the valve port 48. The response speed of the flow rate adjustment is as extremely high as about some tens µsec to some m sec. Such a piezo valve 43 is described in detail in Japanese Utility Model Registration No. 2516824, for example.

Referring back to Fig. 1, the third flow passage 36 measures the total amount of the diluent air A flowing through the first and second flow passages 33 and 34, and includes a venturi flowmeter 60 as a pressure difference flowmeter having a high measuring precision, and a downstream portion of the third flow passage 36 is connected to an upstream portion of the dilution tunnel 4. A pressure sensor 61 for detecting the pressure of air flowing through the third flow passage 36, a pressure difference sensor 62 and a temperature sensor 63 are provided in the vicinity of the venturi flowmeter 60.

The reference number 64 represents a flow rate calculation unit for calculating a flow rate (actual flow rate) of the diluent air A flowing through the third flow passage 36 based on detection outputs of the sensors 61 to 63. The reference number 65 represents a signal distributor which divides an actual flow rate q obtained by the flow rate calculation unit 64 into two signal quantities q₁ and q₂ (q₁ : q₂ = 70 : 30), and outputs them to first and second comparing control circuits 66 and 67, respectively. The comparing control circuits 66 and 67 compare the signal quantities q₁ and q₂ distributed by the signal distributor 65 with input flow rate setting values r₁ and r₂, and send predetermined control signals based on the comparison to the inverter 39 and the valve driving circuit 59, respectively.

In the diluent gas flow rate control apparatus having the above-described structure, outputs from the sensors 61 to 63 provided in the vicinity of the venturi flowmeter 60 provided in the third flow passage 36 are input to the flow rate calculation unit 64, and the total flow rate of the diluent air A to be supplied to the dilution tunnel 4 is obtained in the flow rate calculation unit 64. The total flow rate (actual flow rate) of the diluent air A obtained by this flow rate calculation unit 64 is distributed by the signal distributor 65 such that q₁ : q₂ becomes equal to 7 : 3, and they are supplied to the first and second comparing control circuits 66 and 67.

In the first flow passage 33, the signal quantity q₁ and the set flow rate r₁, are compared with each other in the comparing control circuit 66, and a predetermined control signal is sent to the inverter 39 based on this comparison. The predetermined control signal is output from the inverter 39, thereby controlling the frequency of the root blower pump 37, and the flow rate of the diluent air A flowing through the first flow passage 33 is maintained such that the flow rate is always equal to 70 % of the total flow rate of the diluent air A.

On the other hand, in the second flow passage 34, the signal quantity q₂ and the set flow rate r₂ are compared with each other in the comparing control circuit 67, and a predetermined control signal is sent to the valve driving circuit 59 based on this comparison. A predetermined control signal is output from the valve driving circuit 59, thereby adjusting the opening degree of the valve port 48 of the piezo valve 43, and the flow rate is controlled. That is, feedback control is carried out in accordance with variation of the diluent air A detected in the third flow passage 36, and the flow rate of the diluent air A flowing through the second flow passage 34 is controlled.

Fig. 3 shows variation with time in flow rate in the three flow passages 33, 34 and 36. In Fig. 3, symbols a, b and c respectively correspond to flow rates a, b and c (see Fig. 1) of the diluent air A flowing through the flow passages 33, 34 and 36. As shown in Fig. 3, the flow rate of the diluent air A in the first flow passage 33 is always constant (no variation), the flow rates of the diluent air A in the second and third flow passages 34 and 36 are varied at high speed. Since there is no variation in the flow rate c of the diluent air A in the third flow passage 36 in any of the great flow rate ranges, variation range of the flow rate b of the diluent air A in the second flow passage 34 may be small and therefore, the ability of the pump 40 may be lower, leading to a reduction in cost.

As described above, in the gas flow rate control apparatus according to the invention, although the flow rate of the diluent air A required for the partial dilution type is relatively great, since it is possible to control the flow rate only in varying the flow rate range with high speed response while measuring the flow rate at high speed, it is possible to control the total amount of the diluent air A of a relatively great flow rate in a range from the maximum flow rate to 70 % thereof with high speed response and high precision.

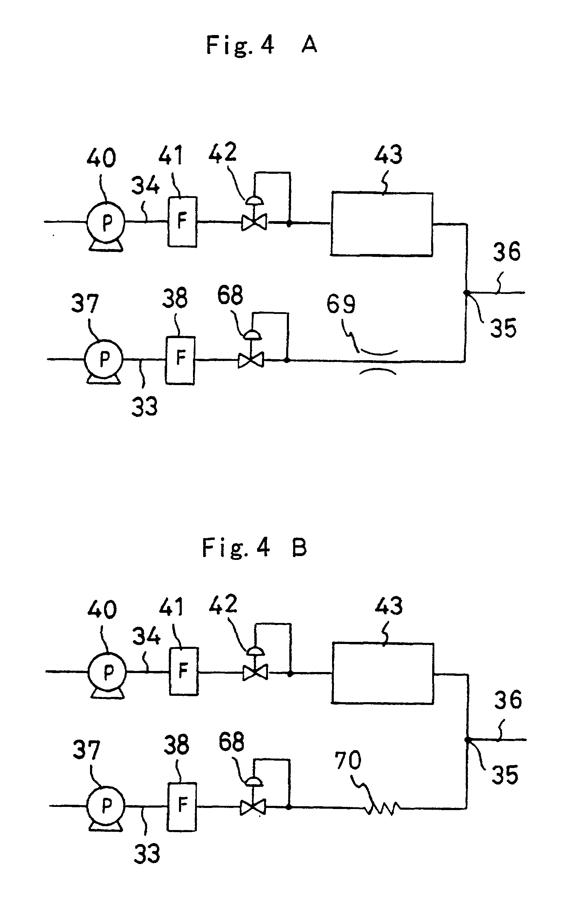

The present invention should not be limited to the above-described embodiment, and may be carried out while variously modifying the invention. The first flow passage 33 may be constructed as shown in Figs. 4A and 4B. That is, as shown in Fig. 4A, a pressure governor 68 and a critical flow orifice 69 may be provided at downstream from the root blower pump 37 and the filter 38. Further, as shown in Fig. 4B, the pressure governor 68 and a flow rate resistance such as a capillary 70 may be provided at downstream from the root blower pump 37 and the filter 38.

Further, the root blower pump 37 provided in the second flow passage 34 may be replaced by a compressor. The venturi flowmeter 60 provided in the third flow passage may be replaced by a laminar flowmeter.

Furthermore, the diluent air may be replaced by appropriate inert gas such as nitrogen gas.

In the above-described gas flow rate control apparatus, the piezo valve having high speed response ability and the pressure difference flowmeter having high flow rate measuring precision are combined. The first flow passage for flowing the diluent gas of constant flow rate irrespective of a variation in flow rate of the exhaust gas and the second flow passage for adjusting the flow rate in accordance with the variation in flow rate of the exhaust gas and flowing the gas are disposed in parallel. The piezo valve is controlled based on the flow rate detected by the pressure difference flowmeter, and only the variation range of the flow rate is controlled. Therefore, even though the flow rate of the gas used for dilution is relatively great, the flow rate can be measured with high precision and can be controlled with high speed response ability. Therefore, according to the present invention, it is possible to realize a gas dilution system using a flow rate control and a partial sampling corresponding to the transient measurement of the engine exhaust gas.

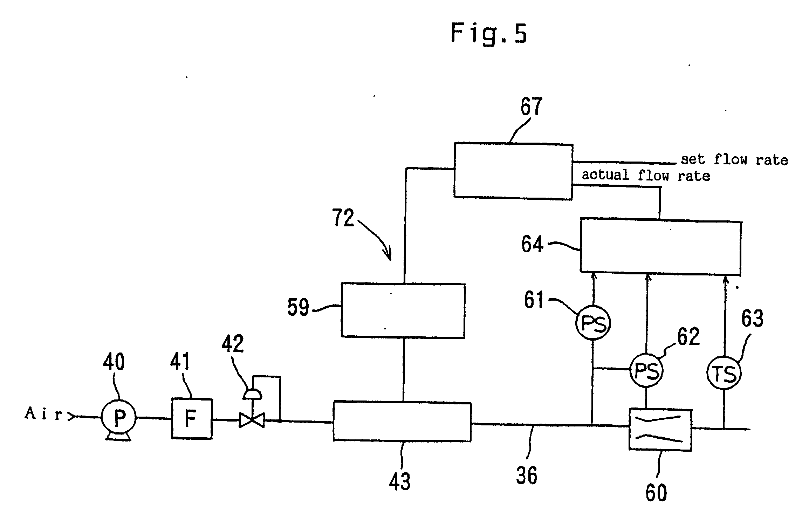

Fig. 5 is a schematic view of the entire structure of a gas flow rate control apparatus 72 according to a second embodiment of the invention. In Fig. 5, reference number 43 represents the piezo valve provided in a flow passage 36. The piezo valve 43 is disposed in series with respect to the venturi flowmeter 60 and upstream therefrom. The piezo valve 43 pushes and drives the valve element which opens and closes a valve port by distortion force of a piezo stack.

The reference number 59 represents a circuit for driving the piezo valve 43. The circuit 59 receives a signal from a comparing control circuit 67 and adjusts the opening degree of the valve port 48 in the piezo valve 43. A suction pump 40, a filter 41 and a pressure governor 42 are provided upstream from the piezo valve 43 in the flow passage 36.

In the gas flow rate control apparatus 72 having the above-described structure, the piezo valve 43 having high speed response ability and the venturi flowmeter 60 having high flow rate measuring precision are connected to each other in series. The actual flow rate obtained by the venturi flowmeter 60 is compared with the set flow rate. The opening degree of the piezo valve 43 is adjusted based on the result of the comparison and therefore, it is possible to control gas such as air with high speed response ability and high precision. Thus, if the gas flow rate control apparatus 72 having such excellent characteristics is incorporated in the diluent gas flow rate control apparatus shown in Fig. 6 (connected to the upstream of the air supply passage 5), a diluent air control system having high speed response ability and high precision required for transient measurement of the engine exhaust gas can be obtained, and with this, it is possible to measure a predetermined PM reliably at high precision.

This invention should not be limited to the above-described embodiment. A laminar flowmeter detecting the flow rate mainly by a pressure difference sensor may be used instead of the venturi flowmeter 60. The pump 40 may be replaced by a compressor.

Although the gas flow rate control apparatus is used as a quantitative supply apparatus of diluent air in a gas dilution system for measuring the engine exhaust gas in the above embodiment, the gas flow rate control apparatus of this invention should not be limited to this, and it is possible to widely use the gas flow rate control apparatus for controlling various gas such as air with high speed response ability and high precision.

In the gas flow rate control apparatus of the second embodiment of the invention, the piezo valve having excellent response ability of the flow rate control and the pressure difference flow rate flowmeter having high measuring precision are combined. The actual flow rate obtained by the pressure difference flowmeter is compared with the set flow rate. The opening degree of the piezo valve is adjusted based on the result of the comparison and therefore, it is possible to control various gas such as air with high speed response ability and high precision.

## Claims

1. A gas flow rate control apparatus for a gas dilution system of a partial dilution type which dilutes a portion of an exhaust gas from an engine, wherein
a first flow passage (33) is provided for a diluent gas of a constant flow rate irrespective of variation in the flow rate of the exhaust gas,
a second flow passage (34) is provided for a diluent gas of an adjustable flow rate in accordance with a variation in the flow rate of the exhaust gas,
the second flow passage (34) is disposed parallel to the first flow passage (33),
the first and second flow passage (33, 34) join together at a confluence (35),
a third flow passage (36) is provided downstream from the confluence (35),
**characterized in that**
the second flow passage (34) has a piezo valve (43) for controlling the flow rate of the diluent gas,
the confluence (35) is provided downstream from the piezo valve (43),
a flowmeter (60) is provided in the third flow passage (36) for detecting a flow rate of a diluent gas flowing through the third flow passage (36), and that
an opening degree of the piezo valve (43) is controllable on the basis of the flow rate detected by the flowmeter (60).

2. The gas flow rate control apparatus according to claim 1, wherein
a control (64, 67, 59) is provided for comparing the actual flow rate obtained by the flowmeter (60) with a set flow rate, and wherein
the opening degree of the piezo valve (43) is adjustable on the basis of the result of the comparison.

3. The gas flow rate control apparatus according to claim 1 or 2, wherein the flowmeter (60) is a pressure difference flowmeter.

## Patentansprüche

1. Gasdurchflussregelvorrichtung für ein Gasverdünnungssystem vom Teilverdünnungstyp, welche einen Teil eines Abgases von einem Motor verdünnt, bei welcher
ein erster Flussdurchgang (33) für ein verdünntes Gas mit einem, ungeachtet einer Änderung im Durchfluss des Abgases konstanten Durchfluss angeordnet ist.
ein zweiter Flussdurchgang (34) für ein verdünntes Gas mit einem, entsprechend einer Änderung im Durchfluss des Abgases einstellbaren Durchfluss angeordnet ist, wobei
der zweite Flussdurchgang (34) parallel zu dem ersten Flussdurchgang (33) angeordnet ist,
der erste und der zweite Flussdurchgang (33, 34) sich in einem Zusammenfluss (35) vereinigen,
ein dritter Flussdurchgang (36) stromabwärts des Zusammenflusses (35) angeordnet ist,
**dadurch gekennzeichnet, dass**
der zweite Flussdurchgang (34) ein Piezoventil (43) zum Steuern des Durchflusses des verdünnten Gases aufweist,
der Zusammenfluss (35) stromabwärts des Piezoventils (43) angeordnet ist,
ein Durchflussmesser (60) in dem dritten Flussdurchgang (36) zum Erfassen eines Durchflusses eines durch den dritten Flussdurchgang (36) strömenden, verdünnten Gases angeordnet ist, und dass
ein Öffnungsgrad des Piezoventils (43) auf der Basis des von dem Durchflussmesser (60) erfassten Durchflusses steuerbar ist.

2. Gasdurchflussregelvorrichtung nach Anspruch 1, bei welcher
eine Steuerung (64, 67, 59) zum Vergleichen des, mittels des Durchflussmessers (60) gewonnenen, tatsächlichen Durchflusses mit einem eingestellten Durchfluss angeordnet ist, und bei welcher
der Öffnungsgrad des Piezoventils (43) auf der Basis des Ergebnisses des Vergleichs einstellbar ist.

3. Gasdurchflussregelvorrichtung nach Anspruch 1 oder 2, bei welcher der Durchflussmesser (60) ein Druckdifferenzdurchflussmesser ist.

## Revendications

1. Appareil de régulation de débit de gaz pour un système de dilution de gaz de type à dilution partielle qui dilue une partie d'un gaz d'échappement émis par un moteur, dans lequel
un premier passage d'écoulement (33) est prévu pour un gaz diluant ayant un débit constant indépendamment d'une variation du débit du gaz d'échappement,
un deuxième passage d'écoulement (34) est prévu pour un gaz diluant ayant un débit ajustable en fonction d'une variation du débit du gaz d'échappement,
le deuxième passage d'écoulement (34) est disposé parallèlement au premier passage d'écoulement (33),
les premier et deuxième passages d'écoulement (33, 34) se rejoignent au niveau d'une confluence (35), et
un troisième passage d'écoulement (36) est prévu en aval de la confluence (35),
**caractérisé en ce que**
le deuxième passage d'écoulement (34) comporte une soupape piézo-électrique (43) destinée à réguler le débit du gaz diluant,
la confluence (35) est disposée en aval de la soupape piézo-électrique (43),
un débitmètre (60) est disposé dans le troisième passage d'écoulement (36) pour détecter un débit d'un gaz diluant circulant à travers le troisième passage d'écoulement (36), et
un degré d'ouverture de la soupape piézo-électrique (43) est réglable en fonction du débit détecté par le débitmètre (60).

2. Appareil de régulation de débit de gaz selon la revendication 1, dans lequel
une unité de commande (64, 67, 59) est prévue pour comparer le débit réel obtenu par le débitmètre (60) avec un débit défini, et dans lequel
le degré d'ouverture de la soupape piézo-électrique (43) est ajustable en fonction du résultat de la comparaison.

3. Appareil de régulation de débit de gaz selon la revendication 1 ou 2, dans lequel le débitmètre (60) est un débitmètre à pression différentielle.
